# FASCICULE DE BREVET EUROPEEN

(11) **EP 2 872 401 B1**
(45) Date de publication et mention de la délivrance du brevet: **13.02.2019**
(21) Numéro de dépôt: 13744700.9
(22) Date de dépôt: 05.07.2013
(51) Int. Cl.: B64D 37/16, B64D 37/00, B67D 7/36, F16K 31/22, F16K 31/30, F16K 15/04, B65D 90/26

(54) **DISPOSITIF D'EMPLISSAGE POUR RÉSERVOIR DE FLUIDE**
VORRICHTUNG ZUM BEFÜLLEN EINES FLUIDTANKS
FILLING DEVICE FOR FLUID TANK

(30) Priorité: 10.07.2012 FR 1256623
(43) Date de publication de la demande: 20.05.2015
(73) Titulaire: Safran Helicopter Engines, 64510 Bordes (FR)
(72) Inventeur: CAZAUX, Yannick, 64230 Arbus (FR); BROTIER, Sébastien, 65320 Borderes Sur L'Echez (FR); BUENO, Armand, 64510 Assat (FR); RENAULT, Lionel, 64290 Bosdarros (FR)
(74) Mandataire: Duflos, Bertrand Guillaume
(86) Numéro de dépôt international: PCT/FR2013/051607
(87) Numéro de publication internationale: WO 2014/009640

(56) Documents cités:
- EP-A1- 0 071 831
- EP-A1- 0 233 445
- GB-A- 534 854
- GB-A- 1 531 502
- GB-A- 2 468 147
- US-A- 1 772 588
- US-A- 3 144 045
- US-A- 3 929 155
- US-A- 5 159 953
- US-A- 5 787 942
- US-A1- 2007 193 650
- US-B1- 6 267 137

## Description

L'invention concerne un dispositif d'emplissage pour réservoir de fluide, en particulier les réservoirs embarqués à bord d'aéronefs, tels que des hélicoptères. Le dispositif d'emplissage désigne ici un dispositif comprenant un conduit d'emplissage par lequel passe le fluide injecté dans le réservoir lorsque le réservoir est rempli. Le dispositif peut remplir diverses fonctions auxiliaires pour augmenter la fonctionnalité du réservoir.

A bord d'aéronefs, des exigences de sécurité peuvent conduire à imposer que la présence d'un ciel gazeux soit assurée en permanence au-dessus du fluide à l'état liquide, à l'intérieur du réservoir.

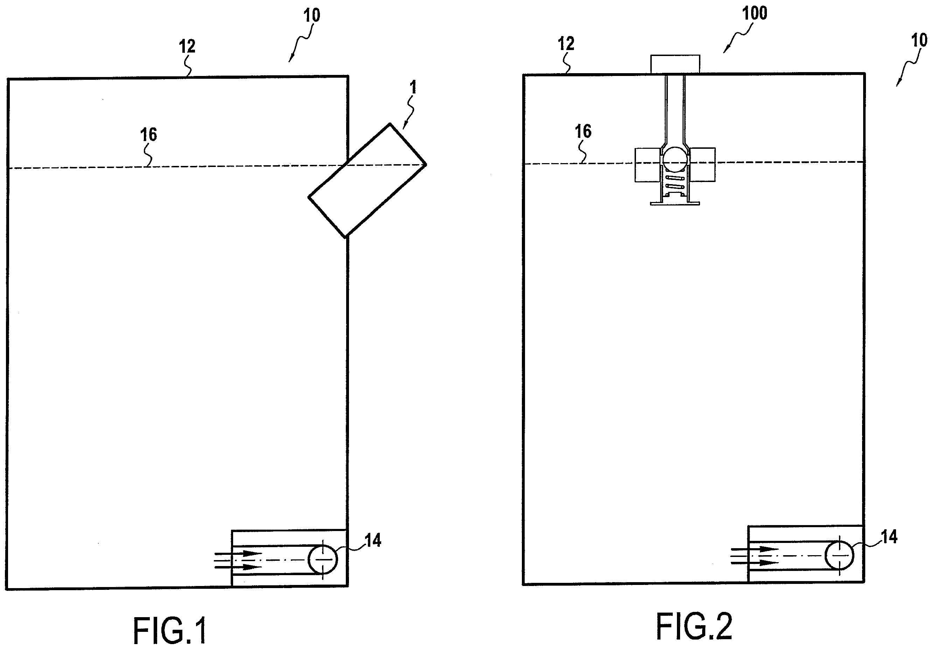

De manière connue, pour atteindre ce résultat et comme le montre la figure 1, un réservoir 10 peut comprendre un corps de réservoir 12, un orifice d'aspiration 14, un dispositif d'emplissage 1. Sur la figure 1, la ligne en pointillés 16 représente le niveau de fluide maximal accepté dans le réservoir. L'espace interne situé dans le corps de réservoir 12 au-dessus de cette ligne 16 ne doit pas contenir de fluide en phase liquide.

Dans le réservoir 10, c'est le dispositif d'emplissage 1 qui, par sa position, empêche que le réservoir 10 puisse être rempli au-dessus de la ligne 16. Dans ce but, le dispositif 1 est placé de telle sorte que si le remplissage du réservoir n'est pas interrompu préalablement, et que le fluide à l'intérieur du réservoir 10 atteint le niveau de la ligne 16, toute quantité supplémentaire de fluide que l'on essaie d'injecter dans le réservoir 10 ressort de celui-ci simplement par gravité via le dispositif 1. En effet, l'orifice de sortie du dispositif 1 est disposé au niveau (c'est-à-dire à la hauteur) de la ligne 16.

Cette solution technique pour empêcher le remplissage excessif du réservoir présente l'inconvénient qu'elle impose au dispositif de remplissage d'être disposé à la hauteur maximale de fluide que l'on veut avoir dans le réservoir (hauteur matérialisée sur la figure 1 par la ligne 16).

Par ailleurs, en général, l'extrémité externe du conduit d'emplissage située à l'extérieur du corps de réservoir est en général prévue pour recevoir un bouchon manipulable à la main, qui sert à fermer le réservoir. Si au moment de remplir le réservoir, on oublie de remettre en place ce bouchon, le fluide peut s'échapper du réservoir de manière intempestive via le dispositif d'emplissage, par exemple sous l'effet de vibrations et de turbulences aériennes affectant l'aéronef.

Il existe donc un besoin pour un dispositif d'emplissage de fluide qui, tout en restant relativement simple :
- assure une protection contre le sur-remplissage en assurant que l'injection de fluide dans le réservoir ne peut entraîner que le niveau de fluide dans le réservoir excède un niveau prédéterminé et cela, sans astreindre néanmoins le dispositif de remplissage à être agencé à une hauteur spécifique prédéterminée par rapport au corps de réservoir ; et
- assure automatiquement une fonction d'anti-retour, c'est-à-dire empêche la sortie intempestive de fluide hors du réservoir via le dispositif d'emplissage.

Cet objectif est atteint grâce au moyen d'un dispositif d'emplissage pour réservoir de fluide selon la revendication 1.

Concernant le premier flotteur, on comprend que lorsqu'il est en deçà de la position prédéterminée, le premier bouchon est en position ouverte (éventuellement seulement partiellement ouverte). On comprend de plus que le déplacement du premier flotteur provoque le déplacement du premier bouchon, mais également par la suite maintient le premier bouchon dans la position qui correspond à la position adoptée par le premier flotteur.

Naturellement, le premier flotteur est déplacé par la poussée d'Archimède qui s'applique sur lui lorsqu'il est immergé dans le fluide contenu dans le réservoir.

Lors du remplissage du réservoir, le premier flotteur est peu à peu déplacé vers le haut par le fluide. C'est ce déplacement qui provoque le passage du premier bouchon en position fermée et par suite, l'arrêt de l'emplissage du réservoir.

Par ailleurs, le réservoir n'est pas nécessairement équipé de moyens qui agissent sur la source de fluide à l'extérieur du réservoir pour arrêter le remplissage de celui-ci. Avantageusement, la fonction réalisée par le dispositif d'emplissage est d'interrompre l'entrée de fluide dans le réservoir, dès que le niveau de fluide dans le réservoir atteint un niveau prédéterminé. Cette interruption est déclenchée par la fermeture du premier bouchon.

Au moment où le premier bouchon se ferme, dans la plupart des modes de réalisation la portion amont du conduit d'emplissage se remplit alors très rapidement de fluide ; elle vient donc à déborder. Le débordement du conduit d'emplissage est détecté par la personne en charge du remplissage, et conduit celle-ci à interrompre immédiatement l'emplissage du réservoir. La fermeture du premier bouchon permet donc d'éviter le sur-remplissage du réservoir.

D'autre part, le dispositif est en général agencé de telle sorte que, après que au commencement d'un passage de fluide dans le conduit dans un sens opposé au sens d'emplissage, ou préalablement à ce passage, le système de maintien du deuxième bouchon a placé le deuxième bouchon en position fermée, le système de maintien maintient le deuxième bouchon en position fermée, et cela en pratique jusqu'à une injection de fluide dans le réservoir via le conduit d'emplissage.

Les dispositions suivantes peuvent être adoptées, seules ou en combinaison :
- le premier flotteur et le premier bouchon peuvent être la ou les même(s) pièce(s), ce qui limite le nombre de pièces.
- le conduit peut présenter une extrémité liée de manière étanche à au moins un orifice de sortie, et en position fermée, le premier bouchon bouche ledit au moins un orifice de sortie. Le ou les orifices de sortie ainsi ne font pas partie du conduit lui-même, mais en revanche sont liés de manière étanche à celui-ci.
- le dispositif peut comporter un guide apte à guider le premier flotteur en translation ; ce guide peut par exemple être constitué par une portion tubulaire du conduit autour de laquelle est disposé le premier flotteur, qui présente par exemple une forme de manchon. C'est un moyen particulièrement simple de réalisation du flotteur.
- le conduit peut comporter au moins un orifice de sortie de fluide ; le premier flotteur et le premier bouchon peuvent être fixés sur un bras de levier monté sur un pivot fixe par rapport au conduit ; le dispositif peut être alors agencé de telle sorte qu'une rotation du bras de levier autour du pivot déplace le premier bouchon entre les positions ouverte et fermée de celui-ci. Le levier présente l'avantage de démultiplier la force exercée sur le premier bouchon.
- le système de maintien peut être apte à maintenir le deuxième bouchon fermé ou du moins sensiblement fermé même lorsque la portion amont du conduit est remplie de fluide. L'expression 'sensiblement fermé' signifie ici qu'un faible débit de fuite est acceptable, dans la mesure où il reste inférieur à 20% du débit de remplissage habituel du réservoir.
- le système de maintien peut être configuré pour mettre en oeuvre une force de rappel choisie dans le groupe comprenant une pression de gaz, une force élastique par exemple d'un ressort, une poussée d'Archimède, un poids, une force magnétique ou électrique.
- le système de maintien peut comporter un élément élastique, par exemple un ressort.
- le deuxième bouchon peut être agencé de telle sorte que, si une pression dans le réservoir est supérieure à une pression à l'extérieur du réservoir, la différence de pression entre le réservoir et l'extérieur du réservoir maintienne le deuxième bouchon en position fermée.
- lorsque le premier flotteur est placé dans la position prédéterminée indiquée précédemment, le premier bouchon reste en position sensiblement fermée et cela même lorsqu'une portion amont du conduit, située en amont du premier bouchon suivant la direction d'emplissage, est remplie de fluide.

Les perfectionnements envisagés précédemment peuvent être également mis en oeuvre dans ce dernier mode de réalisation, dans la mesure où ils sont techniquement compatibles.

En outre, dans ce mode de réalisation le deuxième flotteur et le deuxième bouchon peuvent être la ou les même(s) pièce(s).

L'invention s'applique notamment à un réservoir de fluide équipé d'un dispositif d'emplissage tel que défini précédemment et par suite, à une turbomachine équipée d'un réservoir de ce dernier type.

L'invention sera bien comprise et ses avantages apparaîtront mieux à la lecture de la description détaillée qui suit, de modes de réalisation représentés à titre d'exemples non limitatifs. La description se réfère aux dessins annexés, sur lesquels :
- la figure 1 est une vue schématique en coupe verticale d'un réservoir de carburant connu pour hélicoptère ;
- la figure 2 est une vue schématique en coupe verticale d'un réservoir de carburant pour hélicoptère comprenant un dispositif d'emplissage non revendiqué ;
- les figures 3 et 4 sont des vues schématiques partielles en coupe verticale du dispositif d'emplissage représenté sur la figure 2, dans deux configurations d'exploitation ;
- la figure 5 est une vue schématique partielle en coupe verticale d'un dispositif d'emplissage non revendiqué ;
- la figure 6 est une vue schématique partielle en coupe verticale d'un dispositif d'emplissage non revendiqué ;
- la figure 7 est une vue schématique partielle en coupe verticale d'un dispositif d'emplissage non revendiqué ;
- la figure 8 est une vue schématique partielle en coupe verticale d'un dispositif d'emplissage selon l'invention.

Dans ces figures, les éléments correspondant ou identiques dans différents modes de réalisation portent le même signe de référence et sont en général décrits une seule fois.

La figure 2 représente un réservoir de carburant 10 monté dans un hélicoptère non représenté.

Sur celui-ci est monté un dispositif d'emplissage 100. Avantageusement, le dispositif d'emplissage est monté en partie supérieure du réservoir 10, et n'est pas astreint à être monté à la hauteur maximale de remplissage du réservoir, matérialisée par la ligne de pointillés 16.

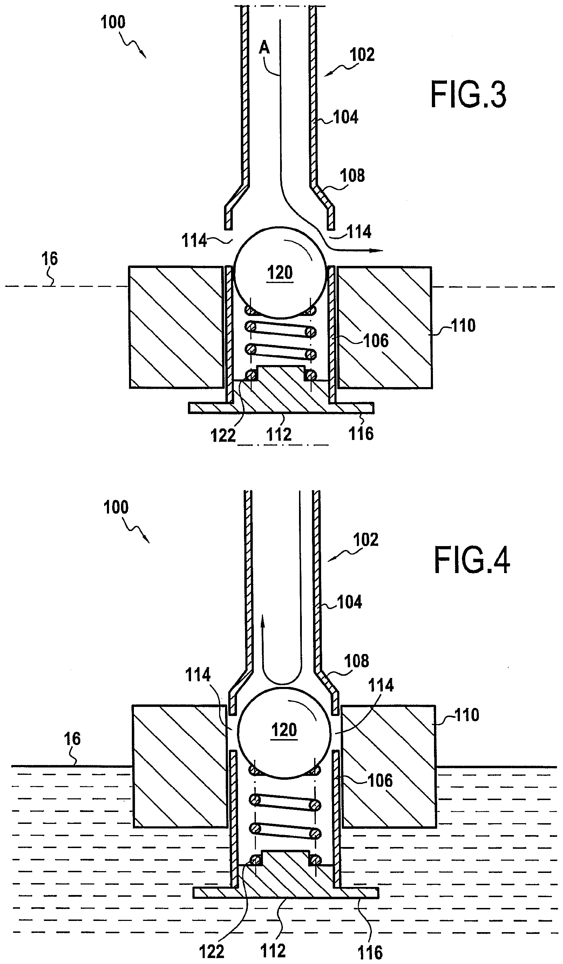

Les figures 3 et 4 présentent la partie inférieure du dispositif 100, dans les configurations dans lesquelles celui-ci se place pour des niveaux de fluide dans le réservoir 10 respectivement faible et élevé.

Le dispositif 100 comporte un conduit d'emplissage comprenant un conduit d'emplissage 102, un premier bouchon 110, pour empêcher le sur-remplissage du réservoir, et un deuxième bouchon 120 pour empêcher une sortie de fluide intempestive du réservoir.

Le **conduit d'emplissage 102** est globalement un tube rectiligne fixé à travers la paroi supérieure du réservoir 10 qu'il traverse suivant une direction verticale en position normale d'exploitation. Il est fermé à son extrémité externe au réservoir par un bouchon non représenté.

Le conduit 102 est formé avec deux portions principales : une portion de tube amont 104, et une portion de tube aval 106. La portion 104 est de plus petit diamètre que la portion 106. Ces deux portions sont reliées par une jonction tronconique 108.

L'extrémité inférieure de la portion 106 est fermée par un obturateur 112 qui la bouche.

La portion 106 (qui constitue l'extrémité interne du conduit 102, étant située à l'intérieur du réservoir) comporte quatre orifices de sortie 114 répartis à même hauteur et à des intervalles angulaires réguliers sur la périphérie de la portion 106, en partie haute de cette portion au voisinage de la jonction 108.

Aussi, lors du remplissage du réservoir, le fluide est injecté dans le conduit 102 suivant la direction d'emplissage, c'est-à-dire du haut vers le bas ; il sort du conduit par les seules issues possibles qui sont les orifices de remplissage 114 (flèche A).

Le **bouchon 110** est un flotteur et présente un rapport poids/volume qui lui permet de flotter dans le fluide contenu dans le réservoir. Il constitue ainsi un premier flotteur. Le premier bouchon et le premier flotteur ne formant ainsi qu'une seule et même pièce, ils sont bien évidemment reliés mécaniquement.

Le flotteur 110 a une forme de manchon et est placé autour de la portion de conduit 106 sur laquelle il peut se déplacer relativement librement. La portion 106 sert ainsi de guide au flotteur 110 lors de ses déplacements.

L'obturateur présente un épaulement de blocage 116, en forme de couronne, qui s'étend radialement vers l'extérieur autour de l'extrémité inférieure de la portion 106.

L'épaulement 116 sert à limiter les déplacements du flotteur 110 vers le bas, et à empêcher que le flotteur 110 ne se détache du conduit 102 et ne tombe au fond du réservoir 10.

Pendant l'exploitation du réservoir, la position du flotteur 110 dépend uniquement du niveau de fluide dans le réservoir.

Lorsque le niveau de fluide est bas, le flotteur 110 repose sur l'épaulement 116 (Fig.3). Le flotteur 210 est alors en position dite 'ouverte', les orifices 114 étant alors ouverts et permettant l'injection de fluide dans le réservoir.

Lorsque le niveau du fluide est suffisant pour soulever le flotteur 110 celui-ci se soulève et coulisse vers le haut en étant guidé autour du conduit 102.

Du fait de ce déplacement, il se place alors progressivement au regard des orifices de sortie 114 et les bouche progressivement.

Lorsqu'il bouche complètement les orifices 114, le conduit 102 est bouché et l'emplissage du réservoir 10 s'arrête. Le flotteur 110 se stabilise au niveau de la ligne 16 dans la position dite position fermée (Fig.4).

On note que lorsque le flotteur 110 se stabilise ainsi au niveau de la ligne 16 et bouche le conduit 102 au niveau des orifices 114, le conduit 102 est plein de fluide. La pression de la colonne de fluide ainsi contenue dans le conduit 102 ne tend pas à faire descendre le flotteur 110 (en tant que premier bouchon), et le flotteur 110 reste en position fermée.

Le **deuxième bouchon 120** est constitué par une bille. Le diamètre et le matériau de la bille, et la forme de la portion de jonction 108, sont choisis de telle sorte que la bille assure la fermeture sensiblement étanche du conduit 102 lorsqu'elle est plaquée contre la portion de jonction 108 (elle est alors en position 'fermée'). La portion 108 peut ainsi être appelée portion de siège pour le conduit 102.

La bille 120 est disposée à l'intérieur de la portion 106. La bille 120 repose sur une spire d'extrémité d'un ressort hélicoidal de compression 122 disposé à l'intérieur de la portion 106 et coaxialement à celle-ci. L'extrémité inférieure du ressort 122 est en appui sur l'obturateur 112.

La longueur du ressort 122 est prévue pour que le ressort exerce en permanence un appui sur la bille 120 et la maintienne plaquée sur la portion de jonction 108.

Par suite, sauf pendant les périodes de remplissage du réservoir, la bille 120 obture le conduit 102 et empêche toute sortie de fluide du réservoir.

Inversement pendant les périodes de remplissage du réservoir, la pression de fluide sur la bille fait légèrement descendre celle-ci, permettant le passage de fluide dans le conduit 102 au niveau de la portion 108 (Fig.3).

Le ressort 122 constitue donc un système de maintien du deuxième bouchon (la bille 120).

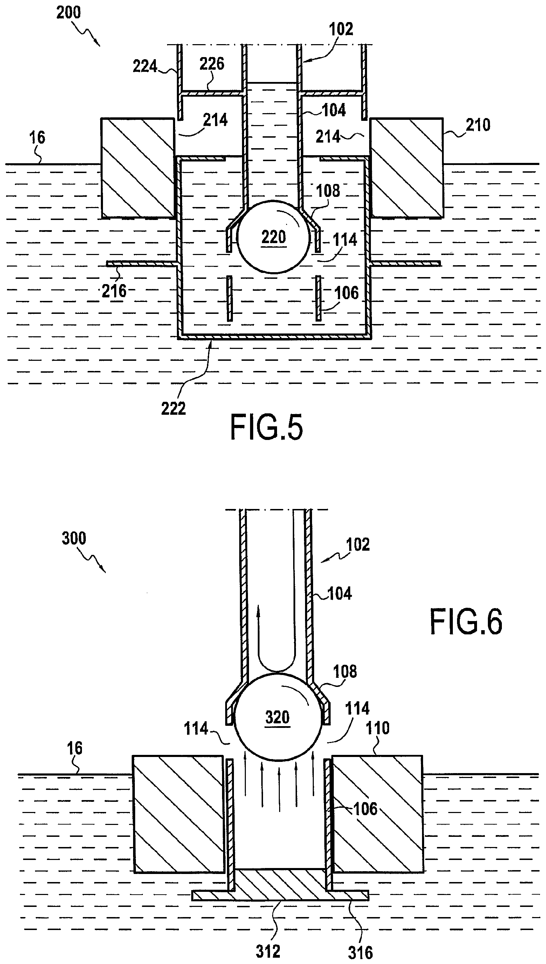

La figure 5 présente un dispositif de remplissage 200 qui diffère du dispositif 100 principalement par la manière dont le système de maintien du deuxième bouchon est réalisé pour assurer la fonction d'anti-retour de fluide, et par suite par les moyens de guidage du premier flotteur 210.

Le dispositif de remplissage 200 comporte un récipient de rétention de fluide 222, disposé autour de l'extrémité inférieure du conduit 102.

Le matériau (et/ou la structure) de la bille 220 est choisi de telle sorte que celle-ci flotte dans le fluide contenu dans le réservoir.

Le récipient 122 est formé de telle sorte que lorsque le réservoir 10 est en position normale, et par conséquent que le conduit 102 s'étend suivant la direction verticale, le récipient 122 reste rempli de fluide au moins jusqu'au niveau de la portion 108.

Par conséquent, la bille 220 est maintenue en permanence submergée dans le liquide.

La poussée d'Archimède s'exerce donc sur la bille et constitue une force de rappel qui tend à plaquer celle-ci en permanence sur la portion 108, et à la maintenir ainsi en position fermée.

Par suite, sauf pendant les périodes de remplissage du réservoir, la bille 220 obture le conduit 102 et empêche toute sortie de fluide du réservoir.

Inversement pendant les périodes de remplissage du réservoir, la pression de fluide sur la bille fait légèrement descendre celle-ci, permettant le passage de fluide dans le conduit 102 au niveau de la portion 108.

D'autre part, du fait de la présence du récipient 222, la forme du premier flotteur 210, qui constitue le premier bouchon, est différente de celle du flotteur 110.

Le récipient 222 présente une paroi extérieure 224 de forme cylindrique et d'axe vertical. Les parois du récipient 222 sont étanches à l'exception d'une part, du passage du conduit 102 à travers la paroi supérieure 226 du récipient, et d'autre part, de quatre orifices de sortie 214 disposés sur la paroi 224 à même hauteur.

Par suite, le conduit présente une extrémité (la portion 106) liée de manière étanche aux orifices de sortie 214 ; ainsi, le fluide qui passe par le conduit 102 ne peut sortir dans le réservoir qu'en passant à travers les orifices de sortie 214.

Le récipient 222 présente en outre un épaulement externe 216 sur la paroi 224. Celui-ci joue le même rôle que l'épaulement 116 dans le dispositif 100 : A savoir, il limite les déplacements vers le bas du flotteur 210.

Le flotteur 210 a une forme de manchon et est dimensionné de manière à pouvoir coulisser autour de la paroi cylindrique 224. Il fonctionne de la même manière que le flotteur 110 :
Lorsque le niveau de fluide dans le réservoir est bas, le flotteur 210 repose sur l'épaulement 216 et est en position dite 'ouverte', les orifices 214 étant alors ouverts et permettant ainsi l'injection de fluide dans le réservoir.

Lorsque le niveau de fluide est suffisant pour soulever et faire flotter le flotteur 210, celui-ci se soulève de l'épaulement 216 et se déplace vers le haut en coulissant autour du récipient 222.

On constate donc que le système de maintien du deuxième bouchon (comprenant notamment le récipient 222) peut être agencé de manière à servir de guide au premier flotteur 210.

Lorsque le niveau du fluide dans le réservoir est suffisamment élevé, le premier bouchon 210 bouche les orifices de sortie 214, entraînant ainsi l'interruption du remplissage du réservoir. Le niveau de fluide se stabilise alors au niveau de la ligne 16 (Fig.5).

**La** **figure 6** présente un dispositif de remplissage 300 intégré à un réservoir de fluide 10. Le dispositif 300 diffère du dispositif 100 principalement par la manière dont le système de maintien du deuxième bouchon est réalisé pour assurer la fonction d'anti-retour de fluide.

Dans ce mode de réalisation, le réservoir est un équipement d'une turbomachine qui, lorsqu'elle fonctionne, maintient le réservoir à une pression supérieure à la pression atmosphérique.

Le dispositif 300 exploite la différence de pression entre l'intérieur et l'extérieur du réservoir pour assurer la fonction anti-retour de fluide.

Dans le dispositif 300, le conduit d'emplissage est formé comme dans le dispositif 100 avec deux portions de tube verticales 104 et 106, reliées par une jonction 108.

Le deuxième bouchon est constitué par une bille 320, disposée dans la portion 106 du conduit d'emplissage. La bille 320 est réalisée en matériau léger. Son diamètre est choisi de telle sorte qu'elle puisse se plaquer sur la jonction 108 de manière à boucher le conduit 102.

Lorsque la bille 320 n'est pas placée sur la jonction 108, sous l'effet de son poids la bille descend dans la portion de tube 106 et se place sur un obturateur 312 prévu pour boucher l'extrémité interne de la portion 106. Elle est alors en position dite 'ouverte'.

Le fonctionnement du dispositif 300 est le suivant :
Contrairement au fonctionnement des billes 120 et 220 des modes de réalisation précédents, la bille 320 ne se place pas en position fermée automatiquement dès l'interruption du remplissage.

Dans le dispositif 300 en effet, c'est une sortie d'air du réservoir 10, ou en tout état de cause le commencement d'une sortie de fluide du réservoir par le conduit d'emplissage 102, qui place la bille 320 en position fermée.

En effet, dès qu'une sortie d'air ou de fluide tend à se produire via le conduit d'emplissage, ce flux entraîne immédiatement la bille 320. Celle-ci se plaque sur la jonction 108 et bouche ainsi le conduit 102. La bille 320 reste alors maintenue en position par la différence de pression régnant entre l'intérieur et l'extérieur du réservoir.

Grâce à cela, la bille 320 empêche toute sortie de fluide du réservoir et assure ainsi la fonction anti-retour souhaitée.

Inversement, dès que l'on injecte du fluide dans le réservoir pour le remplir, la pression du fluide sur la bille 320 décolle celle-ci de la jonction 108, ce qui fait retomber la bille sur l'obturateur 312 en position ouverte, position dans laquelle l'injection de fluide dans le réservoir 10 est possible.

La bille 320 revient ensuite en position fermée après que l'injection de fluide dans le réservoir a été interrompue, dès qu'un courant d'air ou de fluide tend à reprendre dans le conduit 102.

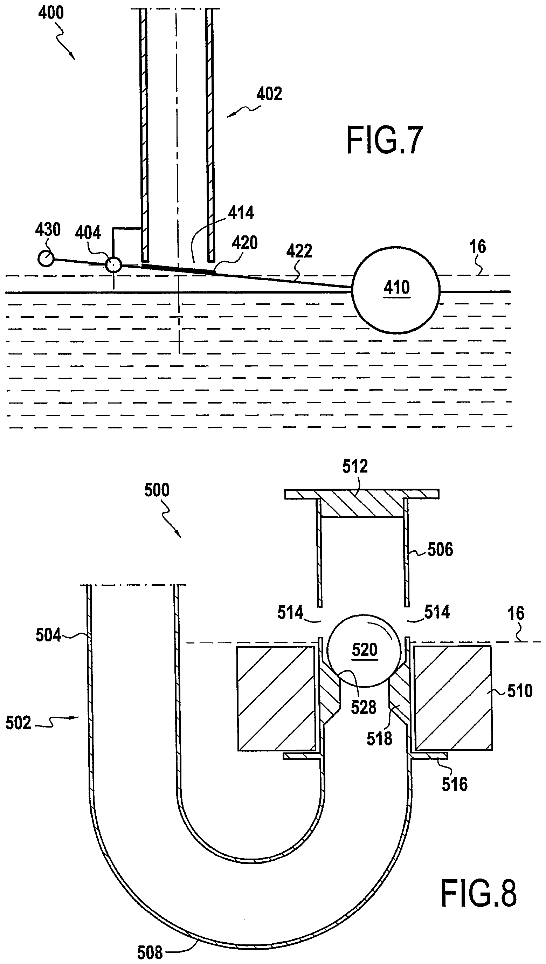

**La** **figure 7** présente un dispositif de remplissage 400 non revendiqué.

Le dispositif 400 comporte un conduit d'emplissage 402 constitué par un simple tube droit, s'étendant à travers la paroi supérieure du réservoir 10.

L'extrémité interne de ce tube présente un orifice de sortie de fluide formé dans l'axe du tube.

Le dispositif 400 comporte en outre un flotteur 410, un bouchon 420, et un contrepoids 430.

Le flotteur 410 (constituant le premier flotteur) et le bouchon 420 (constituant le premier bouchon) sont fixés sur un bras de levier 422 monté sur un pivot 404 fixe par rapport au conduit 402.

Le contrepoids 430 est fixé à une première extrémité du bras de levier 422, sur un premier côté du pivot 404.

Le flotteur 410 est fixé à l'extrémité du bras 422 opposée à sa première extrémité. Le bouchon 420 est interposé entre le pivot 404 et le flotteur 410.

Le dispositif 400 est agencé de telle sorte qu'une rotation du bras de levier 422 autour du pivot 404 déplace le bouchon 420 entre les positions ouverte et fermée de celui-ci.

Sur la figure 7, le bouchon 420 est représenté en position ouverte, c'est-à-dire en l'occurrence qu'il n'est pas plaqué sur l'orifice de sortie 414 du conduit 402.

La position fermée du bouchon 420 est celle dans laquelle il est plaqué sur l'orifice 414.

Avantageusement, le bouchon 420 est à la fois le premier et le deuxième bouchon au sens de l'invention. Cela est rendu possible par le fait que les actions d'une part du premier flotteur 410, et d'autre part du système de maintien prévu dans le dispositif 400, se cumulent pour placer de manière appropriée le bouchon 420 en position ouverte ou fermée, et cela de la manière suivante :
En dehors des périodes de remplissage, et si le niveau de fluide dans le réservoir est suffisamment bas, la position du bras de levier 422 est dictée par le moment d'ouverture du flotteur 410 et le moment de fermeture du contrepoids 430, résultant notamment de leurs poids respectifs. Ces moments sont nommés ainsi car le moment appliqué par le contrepoids 430 au bras de levier 422 tend à placer le bouchon 420 en position fermée, alors que celui engendré par le flotteur 410 tend à placer le bouchon 420 en position ouverte.

Lorsque le flotteur 410 n'est pas poussé vers le haut par la force d'Archimède exercée par le liquide (du fait que le niveau de fluide dans le réservoir est suffisamment bas), le flotteur 410 et le contrepoids 430 sont dimensionnés et positionnés de telle sorte que le moment de fermeture du contrepoids 430 soit prépondérant devant le moment d'ouverture du flotteur 420. Par suite, dans cette situation, le bras de levier 422 maintient le bouchon 420 en position fermée.

Dans cette position, le bouchon 420 remplit une fonction anti-retour de fluide.

A contrario, lors du remplissage du réservoir, la pression du fluide injecté dans le conduit 402 et s'exerçant sur le bouchon 420 engendre un moment d'ouverture s'appliquant au bras de levier 422. Ce moment d'ouverture ajouté au moment d'ouverture du flotteur 410 surmonte le moment de fermeture causé par le contrepoids 430, entraîne l'ouverture de l'orifice 414 du conduit 402, et permet l'injection de fluide dans le réservoir.

Au fur et à mesure que l'on injecte du fluide dans le réservoir, le niveau de fluide s'élève dans le réservoir. A partir d'un certain niveau le flotteur 410 entre en contact avec le fluide et commence à flotter et à s'élever. Comme le flotteur 410 est maintenu par le bras de levier 422, il entame une rotation autour du pivot 404.

Dans ces circonstances, à savoir lorsque le flotteur 420 flotte à la surface du fluide, le flotteur 410 engendre un moment de fermeture, et non plus d'ouverture, moment qui par s'ajoute à celui du contrepoids 430.

Le contrepoids 430, le flotteur 410, le pivot 404 et le bras 422 sont agencés et dimensionnés de telle sorte que le moment de fermeture résultant de l'addition des moments du contrepoids 430 et du flotteur 410 soit supérieur au moment d'ouverture engendré par la pression de fluide s'exerçant sur le bouchon 420 dès que le niveau de fluide atteint un niveau maximal souhaité (ligne 16).

Par conséquent, lorsque le niveau de fluide dans le réservoir s'élève, au fur et à mesure du mouvement vers le haut du flotteur 410, le bras de levier 422 pivote.

Il vient donc un moment auquel l'ouverture 414 se ferme, ce qui provoque l'interruption du remplissage du réservoir. Par cette interruption, le dispositif 400 remplit la fonction souhaitée d'interdiction du remplissage excessif du réservoir 10.

**La** **figure 8** présente un dispositif de remplissage 500 selon l'invention.

Le dispositif 500 comporte notamment un conduit d'emplissage 502, un flotteur 510, une bille 520.

Le conduit d'emplissage 502 est constitué par un tube présentant successivement de l'extérieur à l'intérieur du réservoir : une première portion droite 504, s'étendant verticalement et traversant la paroi supérieure du réservoir 10 (non représentée), une portion coudée 508 formant un coude à 180°, et une deuxième portion droite 506.

L'extrémité du conduit 502 est bouchée par un obturateur 512.

Du fait du coude 508, la portion droite 506 s'étend suivant la direction verticale, l'obturateur étant en haut (en position normale du réservoir 10). La portion 506 comporte des orifices de sortie de fluide 514 situés à une même hauteur. Elle comporte également un épaulement 516 qui joue le même rôle que les épaulements 216 et 316 précédents, à savoir limiter la course vers le bas du flotteur 510.

Le flotteur 510 a une forme de manchon et est disposé autour de la portion 506. Il fonctionne de la même manière que le flotteur 110, de manière à boucher les orifices de sortie 514 dès que le niveau de fluide atteint la ligne 16 (le flotteur 110 étant alors dans la position qui est représentée sur la figure 4), et inversement à autoriser le passage de fluide lorsque le niveau de fluide est plus bas.

La bille 520 constitue au sens de l'invention un élément pesant, au sens où c'est le poids s'exerçant sur la bille qui va lui permettre de remplir sa fonction anti-retour.

Dans ce but, à l'intérieur de la portion 506 est aménagé une butée annulaire 518. Celle-ci est agencée de manière à empêcher la bille 520 de descendre au-delà d'une position inférieure maximale prédéterminée.

De plus, la butée 518 comporte une surface de siège 528 agencée de telle sorte que la bille 520 puisse boucher le conduit 502. Ainsi, lorsque la bille 520 sous l'effet de son poids descend dans la portion 506 (dans laquelle elle est placée), elle se positionne spontanément sur la surface 528, et obture alors le conduit 502.

Inversement lors du remplissage du conduit 502, la bille 520 est soulevée par le flux de fluide sortant et remonte dans la portion 506, jusqu'à permettre le passage de fluide par les orifices 514. Ainsi tout en assurant la fonction d'anti-retour, la bille 520 n'empêche pas l'emplissage du réservoir.

L'obturateur 512 sert, lors de l'emplissage du réservoir, à empêcher que la bille 520 ne soit éjectée par le fluide hors de la portion de conduit 506.

## Revendications

1. Dispositif d'emplissage (500) pour réservoir de fluide (10), comprenant un conduit d'emplissage (502), un premier bouchon (510), pour empêcher le sur-remplissage du réservoir, et un deuxième bouchon (520) pour empêcher une sortie de fluide intempestive du réservoir ;
un premier flotteur (510) relié mécaniquement au premier bouchon de telle sorte que le placement du premier flotteur à une position prédéterminée place le premier bouchon en position sensiblement fermée ; et
un système de maintien du deuxième bouchon qui, au plus tard au commencement d'un passage de fluide dans le conduit dans un sens opposé à un sens d'emplissage du réservoir, place le deuxième bouchon en position fermée, et, lors d'un passage de fluide dans le conduit dans le sens d'emplissage, place le deuxième bouchon en position ouverte ; et dans lequel
chacun desdits bouchons est apte à être placé dans une position ouverte dans laquelle il permet le passage de fluide dans le conduit, ou dans une position fermée dans laquelle il bouche le conduit ; et
une surface interne du conduit présente une portion de siège (528);
le dispositif **se caractérisant en ce que** le système de maintien est agencé de telle sorte que dans une position d'exploitation du dispositif, sous l'effet du poids d'un élément pesant (520), le système de maintien tend en permanence à maintenir le deuxième bouchon (520) dans sa position fermée ;
l'élément pesant est constitué par une bille ou une masse (520) qui constitue également le deuxième bouchon ;
le conduit est agencé de telle sorte que, en position normale du dispositif, sous l'effet de la gravité la bille ou masse tend à se placer sur la portion de siège et ainsi à boucher le conduit ; et
la portion de siège est formée dans une direction d'emplissage en aval d'un coude formant un angle voisin de 180°.

2. Dispositif selon la revendication 1, dont le premier flotteur et le premier bouchon sont la ou les même(s) pièce(s) (510).

3. Dispositif selon la revendication 1 ou 2, dans lequel, en position fermée, le premier bouchon bouche le conduit au niveau de ladite portion de siège.

4. Dispositif selon l'une quelconque des revendications 1 à 3, dont le conduit présente une extrémité liée de manière étanche à au moins un orifice de sortie (514), et en position fermée, le premier bouchon bouche ledit au moins un orifice de sortie.

5. Dispositif selon l'une quelconque des revendications 1 à 4, comportant un guide (506) apte à guider le premier flotteur en translation.

6. Dispositif selon la revendication 5, dont le guide est constitué par une portion tubulaire (506) du conduit autour de laquelle est disposé le premier flotteur.

7. Dispositif selon la revendication 6, dont le premier flotteur présente une forme de manchon.

8. Dispositif selon l'une quelconque des revendications 1 à 4, dont le conduit comporte au moins un orifice de sortie de fluide ;
le premier flotteur et le premier bouchon sont fixés sur un bras de levier monté sur un pivot fixe (404) par rapport au conduit ;
le dispositif est agencé de telle sorte qu'une rotation du bras de levier autour du pivot déplace le premier bouchon entre les positions ouverte et fermée de celui-ci.

9. Dispositif selon l'une quelconque des revendications 1 à 8, dont le deuxième bouchon est agencé de telle sorte que, si une pression dans le réservoir est supérieure à une pression à l'extérieur du réservoir, la différence de pression entre le réservoir et l'extérieur du réservoir maintient le deuxième bouchon en position fermée.

10. Dispositif selon l'une quelconque des revendications 1 à 9, dans lequel, lorsque le premier flotteur est placé dans ladite position prédéterminée, le premier bouchon reste en position sensiblement fermée et cela même lorsque une portion amont du conduit, située en amont du premier bouchon suivant la direction d'emplissage, est remplie de fluide.

11. Réservoir de fluide équipé d'un dispositif selon l'une quelconque des revendications 1 à 10.

## Patentansprüche

1. Vorrichtung (500) zum Befüllen eines Fluidtanks (10), umfassend
eine Befüllleitung (502), einen ersten Verschlussstopfen (510), um eine Überfüllung des Tanks zu verhindern, und einen zweiten Verschlussstopfen (520), um einen unbeabsichtigten Fluidaustritt aus dem Tank zu verhindern,
einen ersten Schwimmer (510), der mechanisch mit dem ersten Verschlussstopfen verbunden ist, sodass das Platzieren des ersten Schwimmers an einer vorbestimmten Position den ersten Verschlussstopfen in eine im Wesentlichen geschlossene Position bringt, und
ein System zum Halten des zweiten Verschlussstopfens, das spätestens zu Beginn eines Fluiddurchgangs in der Leitung in einer Richtung entgegengesetzt zu einer Befüllrichtung des Tanks den zweiten Verschlussstopfen in eine geschlossene Position bringt und das während eines Fluiddurchgangs in der Leitung in Befüllrichtung den zweiten Verschlussstopfen in eine offene Position bringt, und
wobei jeder der Verschlussstopfen geeignet ist, in eine offene Position, in der er das Fluid durch die Leitung strömen lässt, oder in eine geschlossene Position, in der er die Leitung schließt, gebracht zu werden, und
wobei eine Innenfläche der Leitung einen Auflageabschnitt (528) aufweist und
wobei die Vorrichtung **dadurch gekennzeichnet ist, dass**
das Haltesystem so angeordnet ist, dass in einer Betriebsstellung der Vorrichtung das Haltesystem unter dem Einfluss des Gewichts eines Gewichtselements (520) dazu neigt, den zweiten Verschlussstopfen (520) dauerhaft in seiner geschlossenen Position zu halten,
das Gewichtselement aus einer Kugel oder Masse (520) besteht, die gleichzeitig den zweiten Verschlussstopfen darstellt,
die Leitung so angeordnet ist, dass in der normalen Position der Vorrichtung unter dem Einfluss der Schwerkraft die Kugel oder Masse dazu neigt, sich auf den Auflageabschnitt zu legen und so die Leitung zu verschließen, und
der Auflageabschnitt in einer Befüllrichtung stromabwärts eines Krümmers ausgebildet ist, der einen Winkel von etwa 180° bildet.

2. Vorrichtung nach Anspruch 1, wobei der erste Schwimmer und der erste Verschlussstopfen das oder die gleiche/n Teil/e (510) darstellen.

3. Vorrichtung nach Anspruch 1 oder 2, wobei der erste Verschlussstopfen in der geschlossenen Position die Leitung an dem Auflageabschnitt verschließt.

4. Vorrichtung nach einem der Ansprüche 1 bis 3, wobei die Leitung ein Ende aufweist, das dicht mit mindestens einer Auslassöffnung (514) verbunden ist, und wobei der erste Verschlussstopfen in der geschlossenen Position die mindestens eine Auslassöffnung verschließt.

5. Vorrichtung nach einem der Ansprüche 1 bis 4, umfassend eine Führung (506), die geeignet ist, den ersten Schwimmer in Translation zu führen.

6. Vorrichtung nach Anspruch 5, wobei die Führung aus einem rohrförmigen Abschnitt (506) der Leitung besteht, um den herum der erste Schwimmer angeordnet ist.

7. Vorrichtung nach Anspruch 6, wobei der erste Schwimmer eine Hülsenform aufweist.

8. Vorrichtung nach einem der Ansprüche 1 bis 4, wobei die Leitung mindestens eine Fluidauslassöffnung aufweist, der erste Schwimmer und der erste Verschlussstopfen an einem Hebelarm befestigt sind, der auf einem festen Drehpunkt (404) in Bezug auf die Leitung montiert ist, und die Vorrichtung so angeordnet ist, dass eine Drehung des Hebelarms um den Drehpunkt den ersten Verschlussstopfen zwischen seiner offenen und seiner geschlossenen Position bewegt.

9. Vorrichtung nach einem der Ansprüche 1 bis 8, wobei der zweite Verschlussstopfen so angeordnet ist, dass, wenn ein Druck im Tank größer als ein Druck außerhalb des Tanks ist, die Druckdifferenz zwischen dem Tank und der Außenseite des Tanks den zweiten Verschlussstopfen in der geschlossenen Position hält.

10. Vorrichtung nach einem der Ansprüche 1 bis 9, wobei, wenn der erste Schwimmer sich in der vorbestimmten Position befindet, der erste Verschlussstopfen in einer im Wesentlichen geschlossenen Position bleibt, selbst wenn ein stromaufwärts gelegener Abschnitt der Leitung, der stromaufwärts des ersten Verschlussstopfen in der Befüllrichtung angeordnet ist, mit Fluid gefüllt wird.

11. Fluidtank, der mit einer Vorrichtung nach einem der Ansprüche 1 bis 10 ausgestattet ist.

## Claims

1. A filler device (500) for a fluid tank (10), the device comprising:
• a filler duct (502);
• a first stopper (510), for preventing overfilling of the tank, and a second stopper (520) for preventing fluid from leaving the tank in unwanted manner;
• a first float (510) mechanically connected to the first stopper in such a manner that placing the first float in a predetermined position places the first stopper in a substantially closed position; and
• a holder system for holding the second stopper, which system acts, no later than the fluid beginning to pass along the duct in a direction opposite to the tank-filling direction, to place the second stopper in the closed position, and when a fluid passes along the duct in the filling direction, to place the second stopper in the open position; and in which
each of said stoppers is suitable for being placed in an open position in which it allows fluid to pass along the duct, or in a closed position in which it plugs the duct; and
an internal surface of the duct presents a seat portion (528) ;
the device being **characterized in that** the holder system is arranged in such a manner that in an operating position of the device, under the effect of the weight of a heavy element (520), the holder system tends permanently to maintain the second stopper (520) in its closed position;
the heavy element is constituted by a ball or a weight (520) that also constitutes the second stopper;
the duct is arranged in such a manner that in the normal position of the device, under the effect of gravity, the ball or weight tends to move onto the seat portion and thus to plug the duct; and
the seat portion is formed in a filling direction downstream from a bend forming an angle close to 180°.

2. A device according to claim 1, wherein the first float and the first stopper are the same part or parts (510).

3. A device according to claim 1 or claim 2, in which, in the closed position, the first stopper plugs the duct at said seat portion.

4. A device according to any one of claims 1 to 3, wherein the duct presents one end connected in leaktight manner to at least one outlet orifice (514), and in the closed position, the first stopper plugs said at least one outlet orifice.

5. A device according to any one of claims 1 to 4, including a guide (506) suitable for guiding the first float to move in translation.

6. A device according to claim 5, wherein the guide is constituted by a tubular portion (506) of the duct around which the first float is arranged.

7. A device according to claim 6, wherein the first float is in the form of a sleeve.

8. A device according to any one of claims 1 to 4, wherein the duct includes at least one fluid outlet orifice;
the first float and the first stopper are fastened on a lever arm mounted on a pivot (404) that is fixed relative to the duct;
the device is arranged in such a manner that pivoting of the lever arm about the pivot moves the first stopper (420) between its open and closed positions.

9. A device according to any one of claims 1 to 8, wherein the second stopper is arranged in such a manner that, if pressure inside the tank is greater than pressure outside the tank, the pressure difference between the tank and the outside of the tank holds the second stopper in the closed position.

10. A device according to any one of claims 1 to 9, wherein when the first float is placed in said predetermined position, the first stopper remains in a substantially closed position, with this continuing even when an upstream portion of the duct, situated upstream from the first stopper in the filling direction, is full of fluid.

11. A fluid tank fitted with a device according to any one of claims 1 to 10.
